(19) Europäisches Patentamt
European Patent Office
Office européen des brevets

(11) **EP 1 503 575 B1**

(12) **EUROPEAN PATENT SPECIFICATION**

(45) Date of publication and mention
of the grant of the patent:
**20.06.2007 Bulletin 2007/25**

(51) Int Cl.:
***H04N 1/56*** *(2006.01)*

(21) Application number: **04018042.4**

(22) Date of filing: **29.07.2004**

(54) **Device and method for color reduction**

Gerät und Verfahren zur Verminderung der Farbanzahl

Appareil et procédé pour la réduction du nombre de couleurs

(84) Designated Contracting States:
**AT BE BG CH CY CZ DE DK EE ES FI FR GB GR HU IE IT LI LU MC NL PL PT RO SE SI SK TR**

(30) Priority: **30.07.2003 JP 2003203851**

(43) Date of publication of application:
**02.02.2005 Bulletin 2005/05**

(73) Proprietor: **SEIKO EPSON CORPORATION**
**Shinjuku-ku,**
**Tokyo 163-0811 (JP)**

(72) Inventors:
• **Sakai, Atsushi**
**Suwa-shi,**
**Nagano-ken 392-8502 (JP)**
• **Takata, Teruyuki**
**Suwa-shi,**
**Nagano-ken 392-8502 (JP)**

• **Kodama, Tomohiro**
**Suwa-shi,**
**Nagano-ken 392-8502 (JP)**

(74) Representative: **Hoffmann, Eckart**
**Patentanwalt,**
**Bahnhofstrasse 103**
**82166 Gräfelfing (DE)**

(56) References cited:
**WO-A-01/63909        US-A- 4 554 241**
**US-A- 4 903 048       US-A1- 2002 097 436**
**US-B1- 6 206 504**

• **PATENT ABSTRACTS OF JAPAN vol. 1997, no. 11, 28 November 1997 (1997-11-28) & JP 09 200554 A (RICOH CO LTD), 31 July 1997 (1997-07-31)**

**Description**

The present invention relates to a device and a method for color reduction, i.e., for converting image data containing multiple colors, including full-color image data, to image data containing fewer colors.

Each pixel in a 24 bit full-color image contains color data expressed in any of 256-levels for each of the primary colors red (R), green (G), and blue (B). Color reduction is required to print this color data using a limited number of print colors. The term "print color" as used here refers to the basic colors available in a printer to produce color prints, such as the ink colors in an ink jet printer, the toner colors in a laser jet printer, the thermal ribbon colors in a thermal transfer printer, the thermal paper colors in a thermal printer, etc.. Common basic color reduction methods include error diffusion, dithering, and halftoning. Achieving print results that are as close as possible to the original full-color image using just these methods is, however, difficult. It is known to address this problem by first reducing the full-color image to an 8-color image by dithering, and then further reducing this 8-color image to two or three colors using the luminance values of the 8-color image data to achieve print results that are closer to the original full-color image. see, for example, WO Ø1/63909 A, JP-A-2002-269550, JP-A-2002-288682, and JP-A-2002-314833.

The foregoing prior art processes print data based on luminance values, for example, and thus enables image processing effects such as emphasizing contours and generating distinctive images emphasizing specific parts of the original image data. The problem is that print results (i.e., the printed image) greatly different from the original full-color image can easily result. A further problem is that the processes required for color reduction processing are complicated.

The present invention is directed to solving these problems, and an object of this invention is to provide an device and a method for color reduction processing that are simple to configure and capable to produce two-color image print data that allow printing an image closer to the original full-color image than it is possible with prior art techniques. A further object of the invention is to provide such device and method that can easily change the density of individual print colors in print data that has been reduced to two-color print data.

The foregoing objects are achieved by a device as claimed in claim 1 and a method as claimed in claim 10. Preferred embodiments of the invention are subject-matter of the dependent claims.

The principal color print data is thus generated according to the brightness of the RGB color data constituting the full-color image data, and the secondary color print data is generated based on the color data for those two of the colors R, G, or B in the full-color image data that are not designated as the secondary color. The full-color image can thus be reduced to two-color print data that closely represents the original full-color image.

Furthermore, because separate threshold values can be set for the principal color and the secondary color in the color reduction process, the principal color and the secondary color can be emphasized or de-emphasized as desired to produce a two-color print image that is close to the original full-color image.

Other objects and attainments together with a fuller understanding of the invention will become apparent and appreciated by referring to the following description of preferred embodiments taken in conjunction with the accompanying drawings, in which:

Fig. 1 is a function block diagram of a color reduction device according to a preferred embodiment of the present invention;

Fig. 2 shows examples of the reference threshold value matrix, first threshold value matrix, and second threshold value matrix;

Fig. 3 is a function block diagram of the image data processor, principal color processor, and secondary color processor according to a preferred embodiment of the invention;

Fig. 4 is a function block diagram of a correction unit according to a first embodiment of the present invention;

Fig. 5 is a flow chart showing part of the color reduction process according to a first embodiment of the present invention;

Fig. 6 is a flow chart continuing the color reduction process shown in Fig. 5; and

Fig. 7 is a flow showing part of the color reduction process according to another embodiment of the present invention.

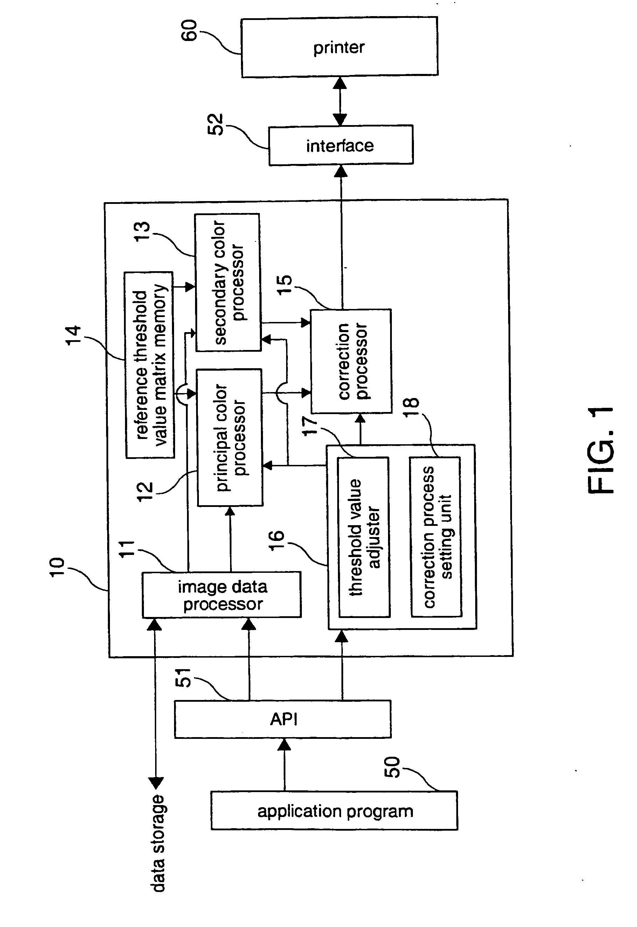

Fig. 1 is a function block diagram of a color reduction unit 10 as one preferred embodiment of the present invention. This color reduction unit 10 can be implemented as part of the printer driver of a personal computer.

In Fig. 1, a processing request is input to the color reduction unit 10 from the application program 50 through the application program interface (API) 51. The image data processor 11 of the color reduction unit 10 reads the image file specified by a specific process request directly from a disk or other data storage medium connected directly or via a network to the system, and thus acquires the full-color image data. The image data processor 11 then divides the acquired full-color image data into units of pixel, i.e., pixel data.

In the 24-bit full-color image data each pixel is represented by a 256-level gradation value (0 to 255) for each of the primary colors red (R), green (G), and blue (B). If the printer is able to print using only a limited number of print colors, it cannot produce all of the gradation levels possible in a full-color image. Therefore, to produce a print image that creates an impression close to that of the original full-color image despite the limited number of print colors, the full-color image data must be converted in the color reduction process to binary values appropriate to the full-color image data.

To reduce full-color image data to two-color image data, the color reduction unit 10 shown in Fig. 1 separates the original image data into a principal and a secondary color, and applies separate color reduction processes to these two colors. The principal color is preferably black or another color with a comparably low brightness level (that is, a relatively dark color). This embodiment of the invention is described using black as the principal color. To produce a print image that is as close as possible to the full-color source image, the secondary color is one of the colors R, G, B. Red (R) is used in this embodiment as the secondary color.

Because different color reduction processes are applied to the principal color and the secondary color, the full-color image data separated into pixel data is output to both the principal color processor 12 and the secondary color processor 13. The color reduction processes applied to the pixel data use the respective colors (principal color and secondary color) to binarize each pixel in the full-color image data. In this embodiment of the invention the principal color processor 12 and the secondary color processor 13 use dithering for color reduction (binarization). More specifically, a threshold value matrix containing specific threshold values is applied to a corresponding matrix of pixels of the full-color image to binarize these pixels.

One or more reference threshold value matrices of reference threshold values are stored in a matrix memory 14. The principal color processor 12 and the secondary color processor 13 respectively read the reference threshold value matrices from the matrix memory 14, compare the threshold values of threshold value matrices with corresponding data matrices of the full-color image, and binarize the pixel values accordingly.

The same reference threshold value matrix can be used as the threshold value matrix for the principal color and as the threshold value matrix for the secondary color, or different threshold value matrices can be used for the principal color and secondary color. For example, to make an image in which the secondary color is brighter than the principal color, or the percentage of dots of the secondary color in the whole image is different from that of dots of the principal color, different threshold value matrices are used for the principal color and secondary color. To simplify the following description, the same reference threshold value matrix is used for both the principal color and the secondary color.

The principal color print data and the secondary color print data reduced (i.e., binarized) by the principal color processor 12 and the secondary color processor 13, respectively, are then corrected by the correction unit 15. Correction processes include filtering to convert some "1 "-print data to "0"-print data to adjust the color balance to achieve an overall brighter print image, and to emphasize the principal color or secondary color. "1"-print data means binary pixel data set to a value ("1" for instance) that indicates the respective pixel is to be printed as a dot in the respective color, whereas "0"-print data means binary pixel data set to a value ("0" for instance) that indicates the respective pixel is not to be printed as a dot.

The threshold value matrix commonly used (in this embodiment) by the principal color processor 12 and the secondary color processor 13 can be changed by the matrix configuration unit 16. The threshold value adjuster 17 of the matrix configuration unit 16 changes the values from the reference threshold value matrix. A request could be asserted from the application program 50, for example, to create a changed threshold value matrix. The value used to create a first changed threshold value matrix that is applied to generate the principal color print data in the principal color processor 12 is called the "first adjustment value" herein, and the value used to create a second changed threshold value matrix that is applied to generate the secondary color print data in the secondary color processor 13 is called the "second adjustment value" herein. In addition, the first changed threshold value matrix is called the "first threshold value matrix," and the second changed threshold value matrix is called the "second threshold value matrix."

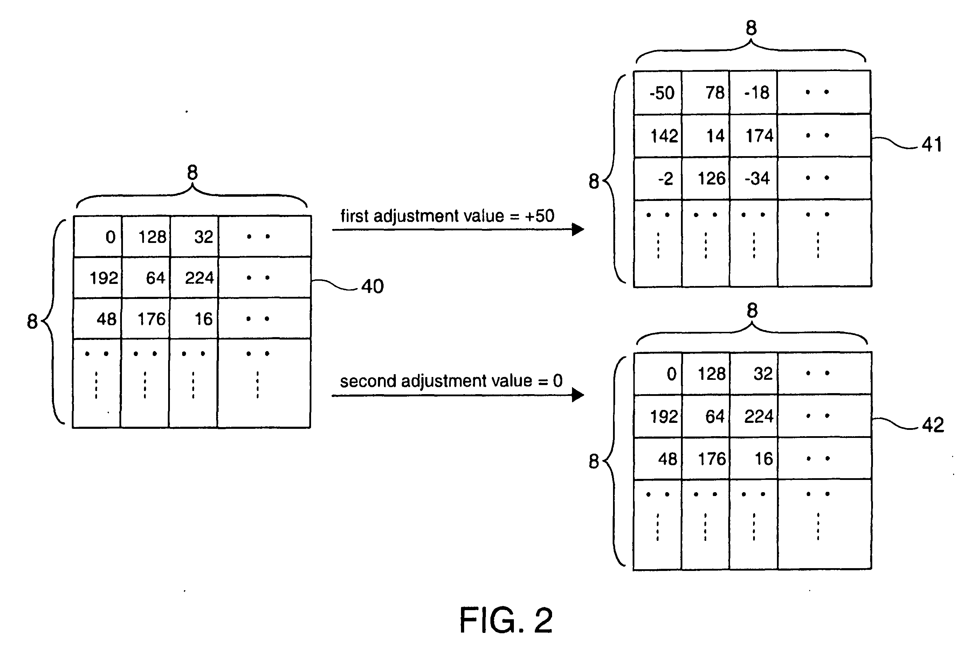

Fig. 2 shows examples of the reference threshold value matrix 40, the first threshold value matrix 41, and the second threshold value matrix 42. Note that in this example the change or adjustment applied to the reference threshold values is a subtraction. The reference threshold value matrix 40 is an 8x8 matrix of threshold values for binarizing full-color image data by dithering. The first threshold value matrix 41 is an 8x8 threshold value matrix in which the first adjustment value (+50) has been subtracted from each threshold value of the reference threshold value matrix 40. The second threshold value matrix 42 is an 8x8 threshold value matrix in which the second adjustment value has been subtracted from each threshold value of the reference threshold value matrix 40 (because the second adjustment value is 0 in this example, no change is made). The first adjustment value and second adjustment value may be negative values.

Because the first adjustment value is +50 in the example shown in Fig. 2, each threshold value in the first threshold value matrix 41 is the corresponding threshold value in the reference threshold value matrix 40 minus 50.

Because the second adjustment value is 0 in the example shown in Fig. 2, the values of the reference threshold value matrix are used as the values of the second threshold value matrix in this example.

**Principal color and secondary color binarization**

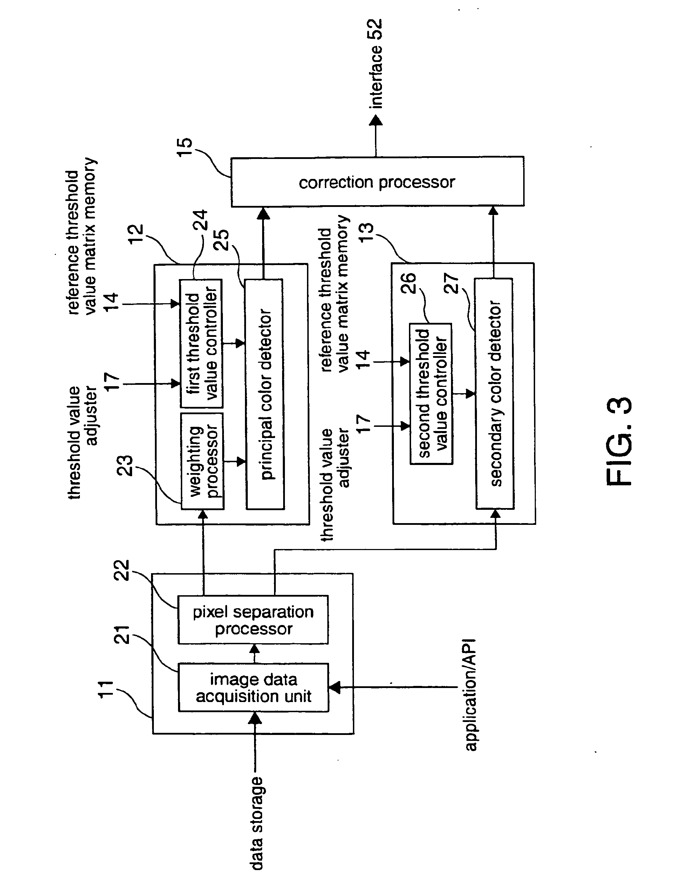

The image data processor 11, the principal color processor 12 and the secondary color processor 13 are described in further detail with reference to Fig. 3. Fig. 3 is a function block diagram of the image data processor 11, principal color processor 12, and secondary color processor 13 according to a preferred embodiment of the invention.

When the image data processor 11 receives a color reduction command from the application program, the image data acquisition unit 21 reads the image file specified by the application program and thus acquires full-color image data. This full-color image data is then divided by the pixel separation processor 22 to RGB pixel data. The separate pixel data is then output to the principal color processor 12 and the secondary color processor 13.

Principal color binarization

The weighting processor 23 of the principal color processor 12 multiplies each component of the RGB data for each pixel by a respective weighting coefficient, adds the resulting R, G and B values together, and thus calculates a weighted value for each pixel. The weighted pixel value MD can thus be obtained from the following equation, for example:

$$MD = (R \text{ value} * 0.299) + (G \text{ value} * 0.578) + (B \text{ value} * 0.144)$$

The first threshold value controller 24 reads the reference threshold value matrix 40 and the first adjustment value from the matrix memory 14 and the threshold value adjuster 17, respectively, and generates the first threshold value matrix that is shown in Fig. 2. The weighted pixel values MD and the first threshold value matrix are both output to the principal color detector 25.

The principal color print data is binarized by comparing each value in a matrix of weighted pixel values with the corresponding value in the first threshold value matrix. Because the first threshold value matrix 41 is an 8x8 matrix, the matrix of weighted pixel values is also an 8x8 matrix.

If a weighted pixel value MD is smaller than or equal to the corresponding value in the first threshold value matrix, the principal color detector 25 sets the print data for that pixel to "1" ("1"-print data or "printing data"), and sets the print data to "0" ("0"-print data or non-printing data) if the weighted pixel value is greater. If the weighted pixel value is equal to the corresponding threshold value in the first threshold value matrix, the print data for that pixel could be set to "1" or to "0", but whether it is set to "1" or to "0" must be predefined (the same applies to corresponding decisions mentioned below mutatis mutandis). The principal color detector 25 thus binarizes the print data for each pixel to either "0" or "1". The binary print data is then output to the correction unit 15.

Secondary color binarization

Of the separate R, G and B pixel data from the pixel separation processor 22, those of the colors that are not used as the secondary color are used to obtain binary print data for the secondary color. For example, if red (R) is used as the secondary color, then the green (G) and blue (B) color values are used for the binarization by means of the second threshold value matrix 42. The second threshold value matrix 42 is generated by the second threshold value controller 26 using the reference threshold value matrix 40 and the second adjustment value as described above.

If the secondary color is red, the secondary color detector 27 compares the respective G and B color values of the RGB pixel data output from the pixel separation processor 22 with the corresponding threshold values in the second threshold value matrix 42. The secondary color detector 27 sets the print data for the secondary color (red) to "1" only if, for the particular pixel, both the G color value and the B color value are smaller than or equal to the corresponding threshold value in the second threshold value matrix 42, and sets the print data for the secondary color value to "0" if at least one of the G and B color values is greater. The secondary color detector 27 thus binarizes the print data for each pixel to either "0" or "1". The binary print data is then output to the correction unit 15.

**Correction process**

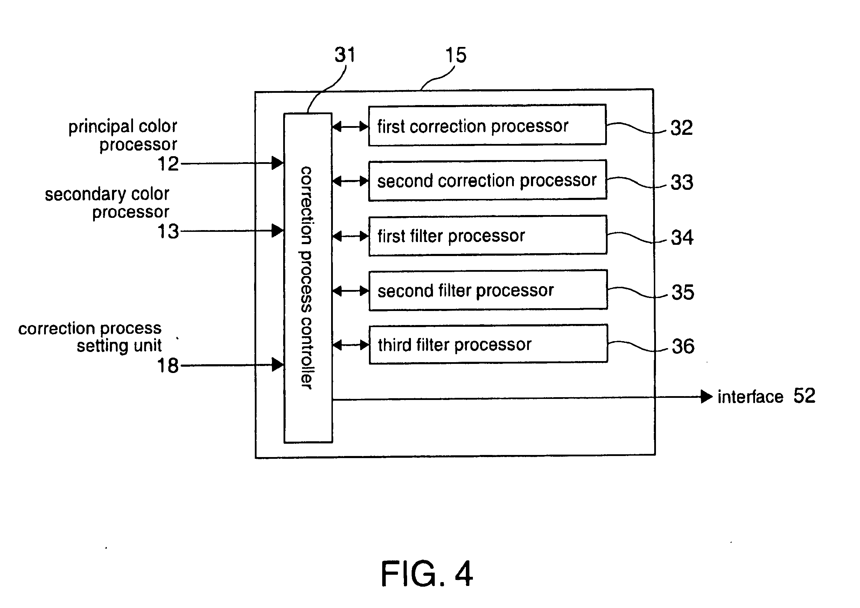

Fig. 4 is a function block diagram of a correction unit 15 according to a first embodiment of the present invention. This correction unit 15 includes a correction process controller 31 for controlling the overall correction process, a first and a second correction processor 32, 33, and first to third filter processors 34 to 36.

The binary print data for the principal color and that for the secondary color output from the principal color processor 12 and secondary color processor 13, respectively, and correction process selection information output from the correction process setting unit 18 of the matrix configuration unit 16, are input to the correction process controller 31. The correction process and the kind of filtering to apply are set in the correction process setting unit 18, which outputs the settings to the correction process controller 31. If neither a correction process nor a filtering process is specified, the binary print data for the principal color and that for the secondary color data are output directly as the print data, and passed through the interface 52 to the printer 60.

If any one of the R, G and B colors is particularly vivid but is printed as black or a comparably dark color, the overall print image will become dark. To prevent this, if any one of the R, G and B color values in the full-color image data is greater than or equal to a specified (first) threshold value, the first correction processor 32 corrects the principal color print data of that pixel to "0" (the principal color will not be printed) even if it was set to "1" by the principal color binarization. The threshold value of this first correction process can be set as desired, but the threshold values of the first threshold value matrix for the principal color are preferably used.

If the color value for the R, G, or B color selected as the secondary color is smaller than a specified (second) threshold value, the second correction processor 33 corrects the secondary color print data of that pixel to "0". If the secondary color is red, for example, and the R color value of a particular pixel is smaller than a specific threshold value, that pixel is set to not print red. This correction prevents the secondary color from being overemphasized during printing.

These two correction processes can run simultaneously, or the correction could be applied in conjunction with the filtering correction described below (enabling specific correction to be applied only in conjunction with a specific filtering process).

The first filter processor 34 filters the principal color and secondary color binary print data in the print data matrix in units of column, that is, by setting the print data for the principal color for all pixels in the first column, for example, to "0", then setting the print data for the secondary color for all pixels in the second column to "0", and alternately repeating this operation throughout the print data matrix.

The second filter processor 35 applies a dot level filter, alternately setting the principal color print data and the secondary color print data to "0" in the first vertical data column, alternately setting the secondary color print data and the principal color print data to "0" in the second vertical data column, and alternately repeating this process to the last data column. The principal color print data and the secondary color print data are thus alternately set to "0" in a checkerboard pattern. This filtering process enables color reduction throughout the print image while producing a brighter image.

The third filter processor 36 filters the principal color and secondary color binary print data by setting the secondary color print data of those pixels to "0" that have set both the principal color and the secondary color print data to "1", thereby giving priority to the principal color.

Note that a configuration in which the correction process of the second correction processor 33 is enabled and applied only when filtering by this third filter processor 36 is applied is also possible.

### Description of the color reduction process

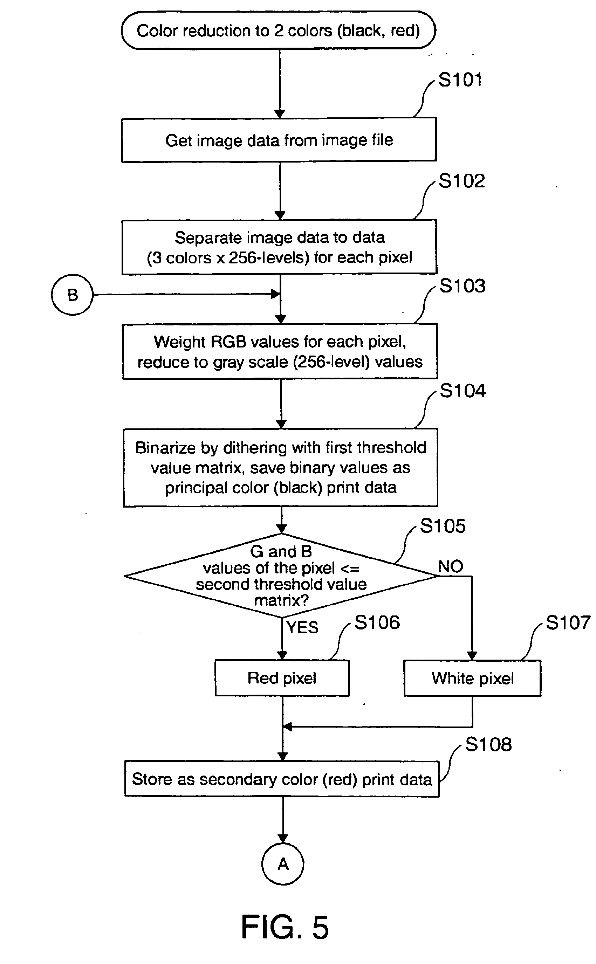

The color reduction process of the present invention is described next below with reference to the flow charts shown in Fig. 5 to Fig. 7. It is again assumed below that the principal color is black and the secondary color is red.

The image data acquisition unit 21 of the image data processor 11 first acquires full-color image data from the image file specified by the application program 50 (S101). The image data is then separated into the pixel data (S102). Each pixel of the image data is expressed by 24-bit RGB data. Each 8-bit component of each pixel's RGB image data is then weighted and the weighted values are added together to obtain the weighted pixel value MD as explained above. Each weighted pixel value MD (8 bit) corresponds to any one of 256 gray scale levels (S103). These pixel values (gray scale data) are then dithered to binary data (1 bit) using the first threshold value matrix, and saved as the principal color print data (S104).

The secondary color print data is binarized next. First, the G and B components of each pixel's RGB image data, i.e., the G and B color values are compared with the threshold values in the second threshold value matrix (S105). If, for a particular pixel, both the G color value and the B color value are smaller than or equal to the corresponding threshold value in the second threshold value matrix (S105 returns Yes), that pixel's binarized print data is set to "1" (S106), but if at least one of the G and B color value is greater than the threshold value in the second threshold value matrix (S105 returns No), that pixel's binarized print data is set to "0" (white, i.e., non-printing) (S107). This secondary color binary print data is stored (S108).

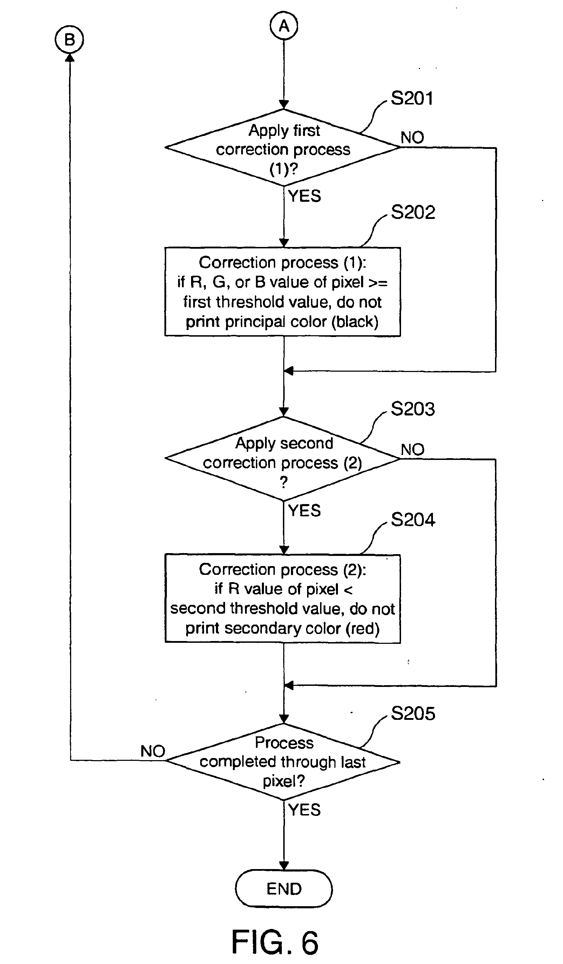

Referring next to Fig. 6, whether correction process (1) was selected is then determined (S201 ). If correction process (1) was selected (S201 returns Yes), the correction process described with reference to the first correction processor 32 above is applied (S202). If correction process (1) is not selected (S201 returns No), correction process (1) (S202) is skipped.

Whether correction process (2) was selected is then determined (S203). If correction process (2) was selected (S203 returns Yes), the correction process described with reference to the second correction processor 33 above is applied (S204). If correction process (2) is not selected (S203 returns No), correction process (2) (S204) is skipped.

Whether the last pixel was processed or not is then determined (S205). If the last pixel has not been processed (S205 returns No), operation returns to step 103 in Fig. 5, and the same process is applied to all pixels (S103 to S205 repeat). When processing all pixels ends and processing the last pixel is completed (S205 returns Yes), the process ends.

Color reduction process with filtering

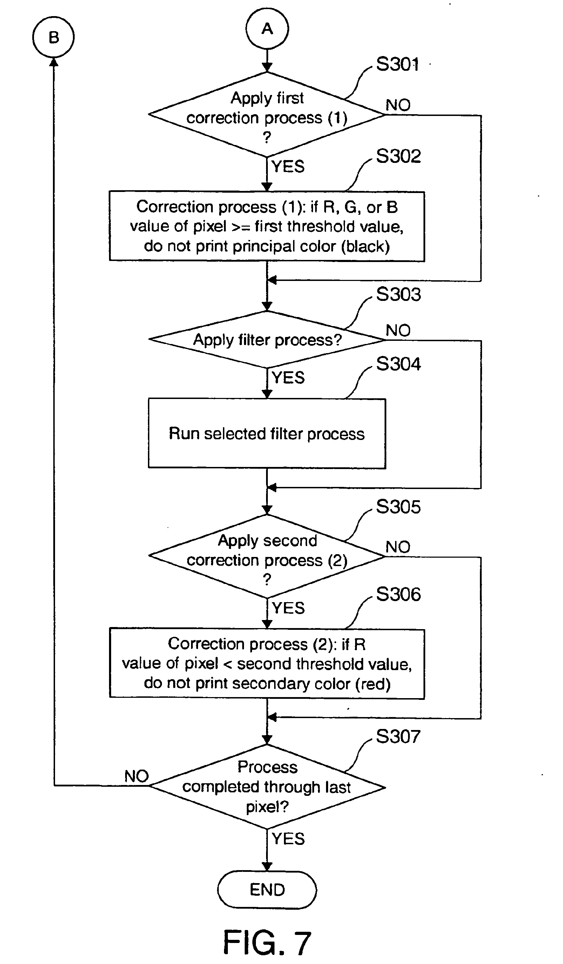

The color reduction process when filtering is included is described next with reference to Fig. 7. Correction process (1) is the same as shown in Fig. 6. If the first correction process (1) is not selected or the first correction process (1) has ended (S301, S302), whether a filtering process is to be applied is determined (S303). If a filtering process is required (S303 returns Yes), the specified filtering process is run (S304). If a filtering process is not required (S303 returns No), whether correction process (2) is selected is determined (S305). If correction process (2) was selected (S305 returns Yes), the second correction process (2) is run (S306). When correction process (2) ends, or if the second correction process (2) was not run (S305 returns No), whether processing the last pixel has been completed is determined (S307). These steps repeat until processing the last pixel ends.

The filtering process is applied before the second correction process (2) in the example shown in Fig. 7, but the filtering process could be applied after the second correction process (2). The process could also be controlled so that the second correction process (2) is executed only if a specific filtering process is applied.

As described above, the present invention binarizes a principal color and secondary color by separate threshold value matrices, and the threshold values of the threshold value matrices for binarization can be separately changed. The density of the principal color and secondary color can thus be easily and separately adjusted and controlled.

Furthermore, by setting the principal color and secondary color print data to "0" (non-printing) according to a specific pattern, or providing a selectable filter means or correction means for correcting print data according to a specific reference value, the print image can be easily adjusted in various ways, including making the image lighter overall or changing the ratio of principal and secondary colors in the print image.

Although the full-color image data has been exemplified as 24-bit color data, it will be appreciated by those skilled in the art that the number of bits of the full-color image data is not critical to the invention. Furthermore, the invention has been described above as generating color-reduced print data from RGB color data and setting at least the secondary color to any of red, green and blue. It goes without saying that the same principle could be applied to other color systems, e.g., CMY color data. It is also possible to include a converter for converting image data acquired as RGB color data to CMY color data and then to apply the teachings explained above to the CMY color data with the principal color set to black or another dark color, and the secondary color set to C, M, or Y, for instance.

**Claims**

1. A color reduction device for converting full-color image data containing pixels defined by red R, green G, and blue B color values to principal color print data and secondary color print data, wherein the principal color is black or another specific low-brightness color and the secondary color is any one of the colors R, G, and B, comprising:

   a matrix storage unit (14) for storing a reference threshold value matrix (40);
   a matrix configuration unit (16) for setting a first adjustment value and a second adjustment value;
   matrix generating means for generating a first threshold value matrix (41) and a second threshold value matrix (42), the first threshold value matrix (41) being generated by adding or subtracting said first adjustment value to or from each value in said reference threshold value matrix (40), and the second threshold value matrix (42) being generated by adding or subtracting said second adjustment value to or from each value in said reference threshold value matrix (40);
   a principal color data processing unit (12) for multiplying each of the R, G, and B color values of each pixel in the full-color image data by a respective coefficient and adding the resulting products to produce, for each pixel, a respective weighted pixel value, and for binarizing each weighted pixel value by respectively comparing a matrix of weighted pixel values with the values of the first threshold value matrix (41), to obtain principal color binary print data; and
   a secondary color data processing unit (13) for generating, for each pixel, secondary color binary print data based on a comparison, with the values of the second threshold value matrix (42), of matrices of color values of the full-color image data for those two colors among R, G and B that are not designated as the secondary color; wherein
   said binary print data indicate either "printing" or "non-printing".

**2.** The device of claim 1, wherein the principal color data processing unit (12) and the secondary color data processing unit (13) are adapted to process color reduction by dithering using the first threshold value matrix (41) and the second threshold value matrix (42), respectively.

**3.** The device of claim 1 or 2, wherein the principal color data processing unit (12) is adapted to calculate the weighted pixel values from the R, G, B color values using the equation:

$$\text{weighted pixel value} = R * 0.299 + G * 0.578 + B * 0.144.$$

**4.** The device of any one of claims 1 to 3, further comprising a first correction process unit (32) for correcting the principal color binary print data of a pixel to "non-printing" irrespective of the binary output value of the principal color data processing unit (12), if for that pixel any one of the R, G, and B color values in the full-color image data is greater than or equal to the corresponding threshold value in the first threshold value matrix (41).

**5.** The device of any one of claims 1 to 4, further comprising a second correction process unit (33) for correcting the secondary color binary print data of those pixels to "non-printing" irrespective of the binary output of the secondary color data processing unit (13), for that, in the full-color image data, the color value of that color that has been designated as the secondary color is smaller than the corresponding threshold value in the second threshold value matrix (42).

**6.** The device of any one of claims 1 to 5, further comprising a filter processing unit (34, 35) for applying to a matrix of said binary print data one or both of: a first filtering process that alternately sets, in units of column, principal color binary print data and then secondary binary color print data to "non-printing", and a second filtering process that alternately sets, in units of pixels, principal color binary print data and then secondary color binary print data to "non-printing" both in the row and the column direction of the said matrix of binarized print data.

**7.** The device of any one of claims 1 to 6, further comprising a third filter processing unit (36) for changing the secondary color binary print data of those pixels to "non-printing" for which the principal color data processing unit (12) and secondary color data processing unit (13) both set the respective binary print data to "printing".

**8.** A printer driver adapted to implement the device of any one of claims 1 to 7.

**9.** A printer control apparatus comprising the device of any one of claims 1 to 7, or the printer driver of claim 8.

**10.** A method of converting full-color image data containing pixels defined by red R, green G, and blue B color values to principal color print data and secondary color print data, wherein the principal color is black or another specific low-brightness color and the secondary color is one of the colors R, G, and B, comprising:

    a) acquiring full-color image data;
    b) acquiring a reference threshold value matrix (40);
    c) generating a first threshold value matrix (41) by adding or subtracting a first adjustment value to or from each value in said reference threshold value matrix (40) and generating a second threshold value matrix (42) by adding or subtracting a second adjustment value to or from each value in said reference threshold value matrix (40);
    d) multiplying each of the R, G and B color values of each pixel in the full-color image data by a respective coefficient and adding the resulting products to produce, for each pixel, a respective weighted pixel value, binarizing each weighted pixel value by respectively comparing a matrix of weighted pixel values with the values of the first threshold value matrix (41), to obtain principal color binary print data; and
    e) generating, for each pixel, secondary color binary print data based on a comparison, with the values of the second threshold value matrix (42), of matrices of color values of the full-color image data for those two colors among R, G and B that are not designated as the secondary color; wherein

said binary print data indicate either "printing" or "non-printing".

**11.** The method of claim 10, wherein steps d) and e) process color reduction by dithering using the first threshold value matrix (41) and the second threshold value matrix (42), respectively.

12. The method of claim 10 or 11, wherein step d) calculates the weighted pixel values from the R, G, B color values in the full-color image data using the equation:

$$\text{weighted pixel value} = R * 0.299 + G * 0.578 + B * 0.144.$$

13. The method of any one of claims 10 to 12, further comprising

f) correcting the principal color binary print data of a pixel to "non-printing" irrespective of the binary output value of step d), if for that pixel any one of the R, G, and B color values in the full-color image data is greater than or equal to the corresponding threshold value in the first threshold value matrix (41).

14. The method of any one of claims 10 to 13, further comprising

g) correcting secondary color binary print data of those pixels to "non-printing" irrespective of the binary output of step e), for that, in the full-color image data, the color value of that color that has been designated as the secondary color is smaller than the corresponding threshold value in the second threshold value matrix (42).

15. The method of any one of claims 10 to 14, further comprising

h) applying to a matrix of said binary print data one or both of: a first filtering process that alternately sets, in units of column, principal color binary print data and then secondary binary color print data to "non-printing", and a second filtering process that alternately sets, in units of pixels, principal color binary print data and then secondary color binary print data to "non-printing" both in the row and the column direction of the said matrix of binarized print data.

16. The method of any one of claims 10 to 15, further comprising

i) a third filtering process for changing the secondary color binary print data of those pixels to "non-printing" for which step d) and step e) both set the respective binary print data to "printing".

17. A program that when executed on a computer implements the steps of the method according to any of claims 10 to 16.

18. A medium readable by a machine, the medium carrying a program of instructions executable by the machine to perform the method according to any of claims 10 to 16.

**Patentansprüche**

1. Gerät zur Farbreduktion zum Wandeln von Vollfarben-Bilddaten, die Bildpunkte enthalten, die durch Rot- R, Grün- G und Blau- B Farbwerte definiert sind, in Hauptfarbendruckdaten und Sekundärfarbendruckdaten, wobei die Hauptfarbe Schwarz oder eine andere spezifische Farbe geringer Helligkeit und die Sekundärfarbe eine der Farben R, G und B ist, mit:

einer Matrixspeichereinheit (14) zum Speichern einer Referenzschwellenwertmatrix (40);
einer Matrixkonfigurationseinheit (16) zum Setzen eines ersten Einstellwertes und eines zweiten Einstellwertes;
einem Matrixerzeugungsmittel zum Erzeugen einer ersten Schwellenwertmatrix (41) und einer zweiten Schwellenwertmatrix (42), wobei die erste Schwellenwertmatrix (41) durch Addieren oder Subtrahieren des ersten Einstellwertes zu oder von jedem Wert der Referenzschwellenwertmatrix (40) erzeugt wird, und die zweite Schwellenwertmatrix (42) durch Addieren oder Subtrahieren des zweiten Einstellwertes zu oder von jedem Wert der Referenzschwellenwertmatrix (40) erzeugt wird;
einer Hauptfarben-Datenverarbeitungseinheit (12) zum Multiplizieren jedes der R-, G- und B-Farbwerte jedes Bildpunktes der Vollfarben-Bilddaten mit einem entsprechenden Koeffizienten und zum Addieren der resultierenden Produkte, um für jeden Bildpunkt einen entsprechenden gewichteten Bildpunktwert zu erzeugen, und zum Binärisieren jedes gewichteten Bildpunktwertes durch den jeweiligen Vergleich einer Matrix der gewichteten Bildpunktwerte mit den Werten der ersten Schwellenwertmatrix (41), um binäre Druckdaten der Hauptfarbe zu erhalten; und

einer Sekundärfarben-Datenverarbeitungseinheit (13) zum Erzeugen binärer Druckdaten der Sekundärfarbe für jeden Bildpunkt auf der Basis eines Vergleichs von Matrizen von Farbwerten der Vollfarben-Bilddaten für diejenigen zwei Farben aus R, G und B, die nicht als die Sekundärfarbe vorgegeben sind, mit den Werten der zweiten Schwellenwertmatrix (42); wobei

die binären Druckdaten entweder "drucken" oder "nicht drucken" angeben.

2. Gerät nach Anspruch 1, bei dem die Hauptfarben-Datenverarbeitungseinheit (12) und die Sekundärfarben-Datenverarbeitungseinheit (13) zur Verarbeitung einer Farbreduktion durch Dithering mittels der ersten Schwellenwertmatrix (41) bzw. der zweiten Schwellenwertmatrix (42) eingerichtet sind.

3. Gerät nach Anspruch 1 oder 2, bei dem die Hauptfarben-Datenverarbeitungseinheit (12) zur Berechnung der gewichteten Bildpunktwerte aus den R-, G-, B-Farbwerten unter Anwendung der Gleichung:

$$\text{Gewichteter Bildpunktwert} = R * 0{,}299 + G * 0{,}578 + B * 0{,}144.$$

eingerichtet ist.

4. Gerät nach einem der Ansprüche 1 bis 3, das ferner eine erste Korrekturprozesseinheit (32) aufweist zum Korrigieren der binären Hauptfarben-Druckdaten eines Bildpunktes zu "nicht drucken" ungeachtet des binären Ausgangswertes der Hauptfarben-Datenverarbeitungseinheit (12), wenn für den betreffenden Bildpunkt einer der R-, G- und B-Farbwerte der Vollfarben-Bilddaten größer als oder gleich dem entsprechenden Schwellenwert der ersten Schwellenwertmatrix (41) ist.

5. Gerät nach einem der Ansprüche 1 bis 4, das ferner eine zweite Korrekturprozesseinheit (33) aufweist zum Korrigieren der binären Sekundärfarben-Druckdaten derjenigen Bildpunkte ungeachtet des binären Ausgangswertes der Sekundärfarben-Datenverarbeitungseinheit (13) zu "nicht drucken", für die in den Vollfarben-Bilddaten der Farbwert der Farbe, die als Sekundärfarbe angegeben ist, kleiner ist als der entsprechende Schwellenwert der zweiten Schwellenwertmatrix (42).

6. Gerät nach einem der Ansprüche 1 bis 5, ferner eine Filterverarbeitungseinheit (34, 35) zum Anwenden eines oder beider der folgenden Prozesse auf eine Matrix der binären Druckdaten aufweisend: einen ersten Filterungsprozess, der abwechselnd binäre Hauptfarben-Druckdaten und dann binäre Sekundärfarben-Druckdaten in Spalteneinheiten auf "nicht drucken" setzt, und einen zweiten Filterungsprozess, der abwechselnd binäre Hauptfarben-Druckdaten und dann binäre Sekundärfarben-Druckdaten in Bildpunkteinheiten sowohl in Zeilen als auch Spaltenrichtung der Matrix aus binärisierten Druckdaten auf "nicht drucken" setzt.

7. Gerät nach einem der Ansprüche 1 bis 6, ferner eine dritte Filterverarbeitungseinheit (36) zum Ändern der binären Sekundärfarben-Druckdaten derjenigen Bildpunkte in "nicht drucken" aufweisend, für die sowohl die Hauptfarben-Datenverarbeitungseinheit (12) als auch die Sekundärfarben-Datenverarbeitungseinheit (13) die jeweiligen binären Druckdaten auf "drucken" gesetzt haben.

8. Druckertreiber, der zum Implementieren des Geräts nach einem der Ansprüche 1 bis 7 eingerichtet ist.

9. Druckersteuervorrichtung, die das Gerät nach einem der Ansprüche 1 bis 7 oder den Druckertreiber nach Anspruch 8 aufweist.

10. Verfahren zum Wandeln von Vollfarben-Bilddaten, die Bildpunkte enthalten, die durch Rot- R, Grün- G und Blau- B Farbwerte definiert sind, in Hauptfarbendruckdaten und Sekundärfarbendruckdaten, wobei die Hauptfarbe Schwarz oder eine andere spezifische Farbe geringer Helligkeit und die Sekundärfarbe eine der Farben R, G und B ist, aufweisend:

a) Erfassen der Vollfarben-Bilddaten;
b) Erfassen einer Referenzschwellenwertmatrix (40);
c) Erzeugen einer ersten Schwellenwertmatrix (41) durch Addieren oder Subtrahieren eines ersten Einstellwertes zu oder von jedem Wert der Referenzschwellenwertmatrix (40) und Erzeugen einer zweiten Schwellenwertmatrix (42) durch Addieren oder Subtrahieren eines zweiten Einstellwertes zu oder von jedem Wert der Referenzschwellenwertmatrix (40);

d) Multiplizieren jedes der R-, G- und B-Farbwerte jedes Bildpunktes der Vollfarben-Bilddaten mit einem entsprechenden Koeffizienten und zum Addieren der resultierenden Produkte, um für jeden Bildpunkt einen entsprechenden gewichteten Bildpunktwert zu erzeugen, Binärisieren jedes gewichteten Bildpunktwertes durch den jeweiligen Vergleich einer Matrix der gewichteten Bildpunktwerte mit den Werten der ersten Schwellenwertmatrix (41), um binäre Druckdaten der Hauptfarbe zu erhalten; und

e) Erzeugen binärer Druckdaten der Sekundärfarbe für jeden Bildpunkt auf der Basis eines Vergleichs von Matrizen von Farbwerten der Vollfarben-Bilddaten für diejenigen zwei Farben aus R, G und B, die nicht als die Sekundärfarbe vorgegeben sind, mit den Werten der zweiten Schwellenwertmatrix (42); wobei

die binären Druckdaten entweder "drucken" oder "nicht drucken" angeben.

11. Verfahren nach Anspruch 10, bei dem in den Schritten d) und e) die Verarbeitung der Farbreduktion durch Dithering unter Verwendung der ersten Schwellenwertmatrix (41 ) bzw. der zweiten Schwellenwertmatrix (42) erfolgt.

12. Verfahren nach Anspruch 10 oder 11, bei dem in Schritt d) die Berechnung der gewichteten Bildpunktwerte aus den R-, G-, B-Farbwerten der Vollfarben-Bilddaten unter Anwendung der Gleichung:

$$\text{Gewichteter Bildpunktwert} = R * 0{,}299 + G * 0{,}578 + B * 0{,}144$$

erfolgt.

13. Verfahren nach einem der Ansprüche 10 bis 12, ferner aufweisend:

f) Korrigieren der binären Hauptfarbendruckdaten eines Bildpunktes ungeachtet des binären Ausgangswertes in Schritt d) zu "nicht drucken", wenn für diesen Bildpunkt einer der R-, G- und B-Farbwerte der Vollfarben-Bilddaten größer als oder gleich dem entsprechenden Schwellenwert der ersten Schwellenwertmatrix (41) ist.

14. Verfahren nach einem der Ansprüche 10 bis 13, ferner aufweisend:

g) Korrigieren der binären Sekundärfarbendruckdaten derjenigen Bildpunkte ungeachtet des binären Ausgangswertes in Schritt e) zu "nicht drucken", für die in den Vollfarben-Bilddaten der Farbwert derjenigen Farbe, die als die Sekundärfarbe angegeben ist, kleiner als der entsprechende Schwellenwert der zweiten Schwellenwertmatrix (42) ist.

15. Verfahren nach einem der Ansprüche 10 bis 14, ferner aufweisend:

h) Anwenden eines oder beider der folgenden Prozesse auf eine Matrix der binären Druckdaten: einen ersten Filterungsprozess, der abwechselnd binäre Hauptfarben-Druckdaten und dann binäre Sekundärfarben-Druckdaten in Spalteneinheiten auf "nicht drucken" setzt, und einen zweiten Filterungsprozess, der abwechselnd binäre Hauptfarben-Druckdaten und dann binäre Sekundärfarben-Druckdaten in Bildpunkteinheiten sowohl in Zeilen als auch in Spaltenrichtung der Matrix aus binärisierten Druckdaten auf "nicht drucken" setzt.

16. Verfahren nach einem der Ansprüche 10 bis 15, ferner aufweisend:

i) einen dritten Filterungsprozess zum Ändern der binären Sekundärfarben-Druckdaten derjenigen Bildpunkte in "nicht drucken", für die sowohl in Schritt d) als auch in Schritt e) die jeweiligen binären Druckdaten auf "drucken" gesetzt wurden.

17. Programm, das bei Ausführung auf einem Computer die Schritte des Verfahrens gemäß einem der Ansprüche 10 bis 16 implementiert.

18. Von einer Maschine lesbares Medium, wobei das Medium ein Programm mit Anweisungen trägt, die von der Maschine ausführbar sind, um das Verfahren gemäß einem der Ansprüche 10 bis 16 auszuführen.

**Revendications**

1. Dispositif de réduction de couleur pour convertir des données d'image polychromes contenant des pixels définis par les valeurs chromatiques rouge R, vert V et bleu B en données d'impression de couleur principale et en données d'impression de couleur secondaire, dans lequel la couleur principale est le noir ou une autre couleur spécifique de faible luminosité et la couleur secondaire est l'une quelconque des couleurs R, V et B, comprenant :

   une unité (14) de mémoire matricielle pour stocker une matrice (40) de valeurs seuils de référence ;
   une unité (16) de configuration de matrice pour régler une première valeur de réglage et une deuxième valeur de réglage ;
   un moyen de génération de matrice pour générer une première matrice (41) de valeurs seuils et une deuxième matrice (42) de valeurs seuils, la première matrice (41) de valeurs seuils étant générée en ajoutant la première valeur de réglage, à ou en soustrayant la première valeur de réglage de, chaque valeur de la matrice (40) de valeurs seuils de référence, et la deuxième matrice (42) de valeurs seuils étant générée en ajoutant la deuxième valeur de réglage à, ou en soustrayant la deuxième valeur de réglage de, chaque valeur de la matrice (40) de valeurs seuils de référence ;
   une unité (12) de traitement des données de couleur principale pour multiplier chacune des valeurs chromatiques R, V et B de chaque pixel des données d'image polychromes par un coefficient respectif et ajouter les produits obtenus pour produire, pour chaque pixel, une valeur pondérée respective de pixel, et pour binariser chaque valeur pondérée de pixel en comparant respectivement une matrice des valeurs pondérées de pixel avec les valeurs de la première matrice (41) de valeurs seuils afin d'obtenir des données d'impression binaires de couleur principale ; et
   une unité (13) de traitement des données de couleur secondaire pour générer, pour chaque pixel, des données d'impression binaires de couleur secondaire basées sur une comparaison, avec les valeurs de la deuxième matrice (42) de valeurs seuils, des matrices de valeurs chromatiques des données d'image polychromes pour les deux couleurs parmi R, V et B qui ne sont pas désignées comme la couleur secondaire ;
   les données d'impression binaires indiquant soit « impression » soit « non-impression ».

2. Dispositif selon la revendication 1, dans lequel l'unité (12) de traitement des données de couleur principale et l'unité (13) de traitement des données de couleur secondaire sont conçues pour traiter une réduction de couleur par juxtaposition en utilisant respectivement la première matrice (41) de valeurs seuils et la deuxième matrice (42) de valeurs seuils.

3. Dispositif selon la revendication 1 ou 2, dans lequel l'unité (12) de traitement des données de couleur principale est conçue pour calculer les valeurs pondérées de pixel à partir des valeurs chromatiques R, V et B en utilisant l'équation:

```
valeur pondérée de pixel = R * 0,299 + G * 0,578 + B *
0,144.
```

4. Dispositif selon l'une quelconque des revendications 1 à 3, comprenant en outre une première unité (32) de correction pour corriger les données d'impression binaires de couleur principale d'un pixel sur «non-impression» quelle que soit la valeur de sortie binaire de l'unité (12) de traitement des données de couleur principale, si, pour ce pixel, l'une quelconque des valeurs chromatiques R, V et B des données d'image polychromes est supérieure ou égale à la valeur seuil correspondante dans la première matrice (41) de valeurs seuils.

5. Dispositif selon l'une quelconque des revendications 1 à 4, comprenant en outre une deuxième unité (33) de correction pour corriger les données d'impression binaires de couleur secondaire des pixels sur « non-impression » quelle que soit la sortie binaire de l'unité (13) de traitement des données de couleur secondaire, si, pour ces pixels, des données d'image polychromes, la valeur chromatique de la couleur qui a été désignée comme la couleur secondaire est inférieure à la valeur seuil correspondante dans la deuxième matrice (42) de valeurs seuils.

6. Dispositif selon l'une quelconque des revendications 1 à 5, comprenant en outre une unité (34, 35) de filtrage pour appliquer à une matrice des données d'impression binaires l'un des processus suivants ou les deux processus suivants: un premier processus de filtrage qui règle alternativement, en unités de colonne, les données d'impression binaires de couleur principale, puis les données d'impression binaires de couleur secondaire sur « non-impression », et un deuxième processus de filtrage qui règle alternativement, en unités de pixels, les données d'impression binaires de couleur principale, puis les données d'impression binaires de couleur secondaire sur « non-impression », à la fois dans le sens des lignes et des colonnes de la matrice de données d'impression binarisées.

7. Dispositif selon l'une quelconque des revendications 1 à 6, comprenant en outre une troisième unité (36) de filtrage pour changer les données d'impression binaires de couleur secondaire des pixels sur « non-impression » pour lesquels l'unité (12) de traitement des données de couleur principale et l'unité (13) de traitement des données de couleur secondaire règlent toutes deux les données respectives d'impression binaires sur « impression ».

8. Pilote d'imprimante conçu pour mettre en oeuvre le dispositif selon l'une quelconque des revendications 1 à 7.

9. Dispositif de commande d'imprimante comprenant le dispositif selon l'une quelconque des revendications 1 à 7 ou le pilote d'imprimante de la revendication 8.

10. Procédé de conversion des données d'image polychromes contenant des pixels définis par les valeurs chromatiques rouge R, vert V et bleu B en données d'impression de couleur principale et en données d'impression de couleur secondaire, dans lequel la couleur principale est le noir ou une autre couleur spécifique de faible luminosité et la couleur secondaire est l'une des couleurs R, V et B, comprenant :

   a) l'acquisition des données d'image polychromes ;
   b) l'acquisition d'une matrice (40) de valeurs seuils de référence ;
   c) la génération d'une première matrice (41) de valeurs seuils en ajoutant une première valeur de réglage à, ou en soustrayant une première valeur de réglage de, chaque valeur de la matrice (40) de valeurs seuils de référence, et la génération d'une deuxième matrice (42) de valeurs seuils en ajoutant une deuxième valeur de réglage à, ou en soustrayant une deuxième valeur de réglage de, chaque valeur de la matrice (40) de valeurs seuils de référence ;
   d) la multiplication de chacune des valeurs chromatiques R, V et B de chaque pixel des données d'image polychromes par un coefficient respectif et l'ajout des produits résultants pour produire, pour chaque pixel, une valeur pondérée respective de pixel, et la binarisation de chaque valeur pondérée de pixel en comparant respectivement une matrice de valeurs pondérées de pixel avec les valeurs de la première matrice (41) de valeurs seuils afin d'obtenir des données d'impression binaires de couleur principale ; et
   e) la génération, pour chaque pixel, des données d'impression binaires de couleur secondaire basées sur une comparaison, avec les valeurs de la deuxième matrice (42) de valeurs seuils, des matrices de valeurs chromatiques des données d'image polychromes pour les deux couleurs parmi R, V et B qui ne sont pas désignées comme la couleur secondaire ;

les données d'impression binaires indiquant soit « impression » soit « non-impression ».

11. Procédé selon la revendication 10, dans lequel les étapes d) et e) traitent une réduction de couleur par juxtaposition en utilisant respectivement la première matrice (41) de valeurs seuils et la deuxième matrice (42) de valeurs seuils.

12. Procédé selon l'une quelconque des revendications 10 ou 11, dans lequel l'étape d) calcule les valeurs pondérées de pixel des valeurs chromatiques R, V et B dans les données d'image polychromes en utilisant l'équation :

```
valeur pondérée de pixel = R * 0,299 + G * 0,578 + B *
0,144.
```

13. Procédé selon l'une quelconque des revendications 10 à 12, comprenant en outre

   f) la correction des données d'impression binaires de couleur principale d'un pixel sur « non-impression » quelle que soit la valeur de sortie binaire de l'étape d), si, pour ce pixel, l'une quelconque des valeurs chromatiques R, V et B des données d'image polychromes est supérieure ou égale à la valeur seuil correspondante dans la première matrice (41) de valeurs seuils.

14. Procédé selon l'une quelconque des revendications 10 à 13, comprenant en outre

   g) la correction des données d'impression binaires de couleur secondaire des pixels sur « non-impression » quelle que soit la sortie binaire de l'étape e), si, pour ces pixels, des données d'image polychromes, la valeur chromatique de la couleur qui a été désignée comme la couleur secondaire est inférieure à la valeur seuil correspondante dans la deuxième matrice (42) de valeurs seuils.

**15.** Procédé selon l'une quelconque des revendications 10 à 14, comprenant en outre

h) l'application à une matrice des données d'impression binaires de l'un des processus suivants ou des deux processus suivants: un premier processus de filtrage qui règle alternativement, en unités de colonne, les données d'impression binaires de couleur principale, puis les données d'impression binaires de couleur secondaire sur « non-impression » et un deuxième processus de filtrage qui règle alternativement, en unités de pixels, les données d'impression binaires de couleur principale, puis les données d'impression binaires de couleur secondaire sur « non-impression », à la fois dans le sens des lignes et des colonnes de la matrice de données d'impression binarisées.

**16.** Procédé selon l'une quelconque des revendications 10 à 15, comprenant en outre

i) un troisième processus de filtrage pour changer les données d'impression binaires de couleur secondaire des pixels sur « non-impression » pour lesquels l'étape d) et l'étape e) règlent toutes deux les données respectives d'impression binaires sur « impression ».

**17.** Programme qui, lorsqu'il est exécuté sur un ordinateur, met en oeuvre les étapes du procédé selon l'une quelconque des revendications 10 à 16.

**18.** Support exploitable par machine, le support supportant un programme d'instructions exécutable par la machine pour exécuter le procédé selon l'une quelconque des revendications 10 à 16.

FIG. 1

EP 1 503 575 B1

41

42

8

8

8

8

-50 | 78 | -18 | · · · ·
142 | 14 | 174 | · · · ·
-2 | 126 | -34 | · · · ·

0 | 128 | 32 | · · · ·
192 | 64 | 224 | · · · ·
48 | 176 | 16 | · · · ·

first adjustment value = +50

second adjustment value = 0

40

8

8

0 | 128 | 32 | · · · ·
192 | 64 | 224 | · · · ·
48 | 176 | 16 | · · · ·

FIG. 2

FIG. 3

EP 1 503 575 B1

principal color
processor
12

secondary color
processor
13

correction process
setting unit
18

```
┌──────────────────────────────────────────────────┐
│  31      15                                        │
│   ┌──────────┐  ┌──────────────────────────┐      │
│   │          │◄─►│  first correction processor │──32│
│   │          │  └──────────────────────────┘      │
│   │ c        │  ┌──────────────────────────┐      │
│   │ o        │◄─►│ second correction processor │─33│
│   │ r        │  └──────────────────────────┘      │
│   │ r        │  ┌──────────────────────────┐      │
│   │ e   p    │◄─►│    first filter processor   │──34│
│   │ c   r    │  └──────────────────────────┘      │
│   │ t   o    │  ┌──────────────────────────┐      │
│   │ i   c    │◄─►│   second filter processor   │──35│
│   │ o   e    │  └──────────────────────────┘      │
│   │ n   s    │  ┌──────────────────────────┐      │
│   │     s    │◄─►│    third filter processor   │──36│
│   │     c    │  └──────────────────────────┘      │
│   │     o    │                                     │
│   │     n    │────────────────────────► interface 52│
│   │     t    │                                     │
│   │     r    │                                     │
│   │     o    │                                     │
│   │     l    │                                     │
│   │     l    │                                     │
│   │     e    │                                     │
│   │     r    │                                     │
│   └──────────┘                                     │
└──────────────────────────────────────────────────┘
```

# FIG. 4

Color reduction to 2 colors (black, red)

S101

Get image data from image file

S102

Separate image data to data
(3 colors x 256-levels) for each pixel

B → S103

Weight RGB values for each pixel,
reduce to gray scale (256-level) values

S104

Binarize by dithering with first threshold
value matrix, save binary values as
principal color (black) print data

S105

G and B
values of the pixel <=
second threshold value
matrix?

NO

YES    S106

Red pixel

S107

White pixel

S108

Store as secondary color (red) print data

A

FIG. 5

Ⓑ          Ⓐ

S201

Apply first
correction process
(1)?    NO

YES

S202

Correction process (1):
if R, G, or B value of pixel >=
first threshold value, do not
print principal color (black)

S203

Apply second
correction process (2)
?    NO

YES

S204

Correction process (2):
if R value of pixel <
second threshold value, do not
print secondary color (red)

S205

NO    Process
completed through last
pixel?

YES

END

FIG. 6

B

A

S301

Apply first
correction process (1)
?

NO

YES

S302

Correction process (1): if R, G, or B
value of pixel >= first threshold value,
do not print principal color (black)

S303

Apply filter process?

NO

YES

S304

Run selected filter process

S305

Apply second
correction process (2)
?

NO

YES

S306

Correction process (2): if R
value of pixel < second threshold value,
do not print secondary color (red)

S307

NO

Process
completed through last
pixel?

YES

END

## FIG. 7

**EP 1 503 575 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002269550 A
- JP 2002288682 A
- JP 2002314833 A